(19) Europäisches Patentamt
European Patent Office
Office européen des brevets

(11) Veröffentlichungsnummer: **0 044 481**
**B2**

(12) **NEUE EUROPÄISCHE PATENTSCHRIFT**

(45) Veröffentlichungstag der neuen Patentschrift: **11.03.87**

(51) Int. Cl.⁴: **C 08 G 18/48,** C 08 G 18/08, C 08 G 18/14

(21) Anmeldenummer: **81105387.5**

(22) Anmeldetag: **10.07.81**

(54) **Verfahren zur Herstellung elastischer geformter Gegenstände.**

(30) Priorität: **21.07.80 US 170426**

(43) Veröffentlichungstag der Anmeldung: **27.01.82 Patentblatt 82/4**

(45) Bekanntmachung des Hinweises auf die Patenterteilung: **13.06.84 Patentblatt 84/24**

(45) Bekanntmachung des Hinweises auf die Entscheidung über den Einspruch: **11.03.87 Patentblatt 87/11**

(84) Benannte Vertragsstaaten: **DE FR GB IT SE**

(56) Entgegenhaltungen:
**EP - A - 0 017 928**
**EP - A - 0 017 928**
**EP - A - 0 026 915**
**DE - A - 1 694 667**
**DE - A - 1 962 501**
**DE - A - 2 211 914**
**DE - A - 2 233 080**
**DE - A - 2 461 363**
**DE - B - 2 156 477**
**DE - B - 2 622 951**
**GB - A - 1 089 140**
**GB - A - 1 534 258**
**US - A - 3 583 926**

**Kunststoff-Handbuch Band VII, Polyurethane, Vieweg-Höchtlen, Carl Hanser Verlag München 1966, Seiten 45, 61, 62, 64, 65, 68**
**Journal of Cellular Plastics, March/April 1972, 90-99**
**Kunststoff-Handbuch 7, G. Oertel, 2. Aufl. 1983, 213, 215**

(73) Patentinhaber: **Mobay Chemical Corporation, Penn Lincoln Parkway West, Pittsburgh, Pennsylvania 15205 (US)**

(72) Erfinder: **Taylor, Ronald P., 101 Queensgate Drive, Coraopolis Pennsylvania 15108 (US)**
Erfinder: **Philips, Barry A., 3 Biscayne Drive, Slovan Pennsylvania 15078 (US)**

(74) Vertreter: **Weber, Gerhard, Dr. et al, BAYER AG Zentralbereich Patente, Marken und Lizenzen, D-5090 Leverkusen, Bayerwerk (DE)**

EP 0 044 481 B2

**Beschreibung**

Die vorliegende Erfindung betrifft verbesserte Polyurethan-Elastomere mit integraler Randschicht, die mit Hilfe eines Reaktionsspritzgiessverfahrens (RIM) hergestellt werden.

Die Herstellung von Formteilen mit integraler Randschicht mittels des Isocyanat-Polyadditionsverfahrens ist bekannt. Es wird beispielsweise durchgeführt, indem eine reaktionsfähige und, wahlweise, schäumbare Mischung auf der Basis von Verbindungen mit mehreren reaktionsfähigen Wasserstoff-Atomen und Polyisocyanaten in eine Form eingeführt wird (vgl. z.B. die GB-PS 969 114). Die in der vorstehend zitierten Druckschrift verwendeten, reaktionsfähige Wasserstoff-Atome enthaltenden Verbindungen sind vorzugsweise Hydroxyl-Gruppen enthaltende Polyether und Polyester. Die verwendeten Polyisocyanate sind beispielsweise 2,4- und 2,6-Tolylendiisocyanat und isomere Mischungen aus diesen. Ebenfalls geeignet sind die Polyphenyl-polymethylen-polyisocyanate, die durch Kondensation von Anilin mit Formaldehyd und nachfolgende Phosgenierung erhalten werden. Wasser und/oder Fluorchlorkohlenwasserstoffe können beispielsweise als Treibmittel verwendet werden. Im allgemeinen werden auch die in der Technik bekannten, für die Herstellung von Polyurethanen verwendbaren Katalysatoren angewandt.

Durch geeignete Auswahl der Ausgangsverbindungen ist es möglich, nach diesem Verfahren elastische Erzeugnisse, starre Erzeugnisse sowie Varianten herzustellen, die zwischen diesen beiden Extremen liegen.

Wie in der GP-PS 1 534 258 erläutert wird, ist es möglich, Systeme, die Diamine enthalten, als kettenverlängernde Mittel zu verwenden. Im allgemeinen ist jedoch ein Direktverfahren dort nicht anwendbar, wo Diamin-Kettenverlängerer eingesetzt werden. Es ist erforderlich, zunächst ein NCO-Gruppen enthaltendes Voraddukt («Prepolymer») herzustellen. Dieses Voraddukt wird dann in einer zweiten Stufe mit dem Diamin zur Bildung des Elastomeren mit hohem Molekulargewicht zur Reaktion gebracht (US-PS 3 428 610).

Die Herstellung schwer beanspruchter Formteile erfordert im allgemeinen den Einsatz von Ausgangsmaterialien mit leicht verzweigter Struktur, die nach der Verarbeitung Materialien mit einem Spektrum von Eigenschaften liefern, das demjenigen von Elastomeren ähnelt. Solche Formteile werden seit einiger Zeit technisch hergestellt (beispielsweise in Form von Sohlen für die Schuhindustrie). Grosse Formteile dieser Art werden in der kraftfahrtechnischen Industrie verwendet.

Die Ausgangsmaterialien werden zu Kraftfahrzeug-Karosserieteilen in erster Linie mit Hilfe des sogenannten «Reaktionsspritzgiessverfahrens» (RIM process) verarbeitet. Dieses Verfahren stellt eine Einfülltechnik dar, bei der die hochaktiven flüssigen Ausgangsverbindungen mit Hilfe von Hochleistungs-Hochdruck-Dosiereinrichtungen rasch in die Form eingespritzt werden, indem sie in sogenannten «statischen Aufprall» – («static impingement») – Mischköpfen miteinander vermischt wurden.

Eine genauere Beschreibung des Reaktionsspritzgiess-(RIM)-Verfahrens findet sich beispielsweise in den folgenden Veröffentlichungen: Piechota/Rohr, «Integralschaumstoffe», Carl-Hanser-Verlag, München/Wien, 1975; Prepelka/Wharton, «Reaction Injection Molding in the Automotive Industry», Journal of Cell. Plastics, Vol. II, No. 2, 1975; Knipp, «Plastics for Automobile Safety Bumpers», Journal of Cell. Plastics, No. 2, 1973.

Mit Hilfe des Reaktionsspritzgiess-(RIM)-Verfahrens ist es möglich, grosse Formteile mit Gewichten bis hinauf zu 10 kg oder mehr herzustellen. Diese grossen Formteile werden beispielsweise in Form flexibler Kraftfahrzeug-Karosserieteile verwendet. Sie sind in der Kraftfahrzeugindustrie als sogenannte Elemente mit «elastischer Aufprallfläche» («soft face») bekannt, d.h. als reversibel verformbare Front- oder Heckteile von Kraftfahrzeugen.

Das Reaktionsspritzgiessen (RIM) hat zur Herstellung von Formteilen, wie oben beschrieben, geführt, die gegenüber dem Stand der Technik einen grossen Vorteil aufweist. Grosse Mengen zweier flüssiger, hoch reaktionsfähiger Ausgangsmaterialien werden nämlich rasch (innerhalb von etwa zwei bis vier Sekunden) und unter gleichzeitiger Vermischung der Form zugeführt und in diese eingespeist, wo das Erhärten unter Bildung des fertigen Formteils sehr schnell (innerhalb von 15 s bis 2 min) erfolgt.

Bevor diese neue Technologie für praktische Zwecke eingesetzt werden konnte, mussten die folgenden drei Probleme gelöst werden.

Erstens muss die Reaktionsmischung wegen der hohen Reaktionsfähigkeit der beiden Ausgangsverbindungen (Polyisocyanat und gegenüber Polyisocyanat reaktionsfähige Verbindungen) in die Form in der kürzest möglichen Zeit, einer Zeit, die höchstens so lang wie die Gelzeit ist, eingeführt werden. Daraus entstand die Notwendigkeit, axial und radial hochleistungsfähige Kolbenpumpen zu entwickeln, die nach Einbau in Hochdruckanlagen Mengendurchsätze von 0,5 bis 6,5 kg/s ermöglichen würden. Derartige Anlagen werden beispielsweise in den DE-OSen 1 778 060 und 2 146 054 (GB-PS 1 382 741) beschrieben.

Zweitens ist die genaue Dosierung der beiden Bestandteile in einem vorher festgelegten Verhältnis, das von der speziellen Formulierung abhängt, während der gesamten Dauer der «Spritzphase» («shooting-in» phase) notwendig. Zusätzlich ist auch die gründliche Vermischung beider Komponenten vom ersten bis zum letzten Tropfen für die Herstellung eines Fehlstellen-freien Formteils von entscheidender Bedeutung. Die zufriedenstellende Durchmischung wird durch die hohen Durchflussgeschwindigkeiten der beiden Bestandteile und die ausserordentlich kurzen Verweilzeiten in der Mischkammer des Mischkopfs sehr erschwert. Dies Problem wurde durch

die Verwendung sogenannter «statischer Aufprall» – («static impingement») – Mischköpfe, die nach dem «Gegenstrom-Einspritz-Prinzip» («countercurrent injection principle») arbeiten, gelöst [vgl. dazu die DE-AS 1 948 999 (US-PS 3 709 640) sowie die DE-OSen 2 007 935 (US-PS 3 706 515), 2 219 389 (US-PS 3 857 550) und 2 364 501 (US-PS 3 926 219)].

Drittens wird beim Eintritt des Reaktionsmischung in die geschlossene Form die in dieser enthaltene Luft nahezu augenblicklich verdrängt. Um unerwünschte Lufteinschlüsse und damit Fehlstellen im fertigen Erzeugnis zu vermeiden muss die einströmende Flüssigkeit die Luft in Form einer «Strömungsfront» («flow front») vor sich her schieben und sie durch vorher bestimmte schlitzartige Austrittsöffnungen hinauspressen. Somit muss zur vollständigen Vermeidung von Turbulenz während des Füllvorgangs das Material über eine beträchtliche Breite in Form einer laminaren Strömung entlang den Wandungen der Spritzform in diese eintreten. Dieses Problem wurde durch die Entwicklung einer bestimmten Angusstechnik unter Verwendung sogenannter «Flächenanschnitte» («film gates») nach Art derjenigen überwunden, die in den DE-OSen 2 348 658 (US-PS 3 991 147) und 2 348 608 (US-PS 3 908 966) beschrieben wurden.

Die DE-OS 2 622 951 (GB-PS 1 534 258) beschreibt, wie sogar Gemische mit hoher Reaktionsfähigkeit, d.h. in Direktverfahren eingesetzte Gemische, aus aktiven Polyisocyanaten, aktiven aromatischen Polyaminen, primäre Hydroxyl-Gruppen enthaltenden Polyhydroxyl-Verbindungen mit relativ hohem Molekulargewicht und starken Katalysatoren, die Gelzeiten von weniger als einer Sekunde besitzen, nach diesem Verfahren verarbeitet werden können. Bei solchen Systemen erfolgt der Übergang von der flüssigen zur festen Phase fast augenblicklich, und zwar mit dem Ergebnis, dass die flüssige Reaktionsmischung an den Wandungen der Form erhärtet.

Mit Hilfe des vorliegenden Verfahrens ist es möglich, grossvolumige und gleichzeitig dünnwandige (Wandstärke $<3$ mm) komplizierte Hohlformen zu füllen. Noch flüssiges Material, das unter dem Fülldruck der Anlage fortlaufend in die Form eintritt, bis der Füllvorgang beendet ist, scheint sich seinen Weg durch die peripheren Zonen des an den Wandungen der Form erhärteten Formteils zu erzwingen. Dies scheint die Tatsache zu erklären, dass es möglich ist, Formteile mit höheren Gewichten herzustellen, als das aufgrund des Vergleichs der Gelzeit mit der Füllzeit (für ein vorgegebenes Füllvolumen pro Sekunde) theoretisch möglich erscheint. Darüber hinaus ermöglicht die herabgesetzte Geschwindigkeit der Viskositätszunahme gemäss der vorliegenden Erfindung im Vergleich zu den Amin-verlängerten Systemen gemäss dem Stand der Technik längere Fliesszeiten, als sie vorher möglich waren. Nach Beendigung des Spritzvorgangs erhärtet die Reaktionsmischung insgesamt so schnell, dass im Falle von hoch-reaktionsfähigen Chargen die Spritzform nach weniger als dreissig Sekunden geöffnet und das Formteil aus ihr entnommen werden kann.

Diese neuen Systeme behalten die Fähigkeit, ein Formteil zu erzeugen, das ein niedriges Feuchtigkeitsabsorptionsvermögen besitzt, wie dies auch bei den schon früher bekannten Amin-verlängerten Systemen unter Anwendung des Reaktionsspritzgiess-(RIM)-Verfahrens gegeben ist. Dies ist bei der formenden Herstellung von Kraftfahrzeugteilen aus mehreren Gründen notwendig. Es ermöglicht eine erleichterte Oberflächen-Schlussbehandlung der Formteile und vermindert in erheblichem Masse die Bildung von Blasen an der Oberfläche oder im Inneren des auf die Formteile aufgebrachten Oberflächenlacks. Ein solches niedriges Feuchtigkeitsabsorptionsvermögen ist auch Vorbedingung, um ein Werfen oder Quellen der Teile unter Kontrolle zu halten. Diese notwendigen Parameter werden durch die vorliegende Erfindung geliefert, die darüber hinaus auch längere Gelzeiten verfügbar macht. Ein weiterer Vorteil der vorliegenden Erfindung besteht darin, dass sie die Neigung zur Bildung von Einsackstellen (Mulden) in den Formteilen erheblich vermindert.

Obwohl es prinzipiell auch möglich ist, grossvolumige Hohlformen unter Verwendung des Systems gemäss der DE-OS 2 622 951 (GB-PS 1 534 258) zu füllen, genügen diese Systeme nicht in vollem Umfang den praktischen Erfordernissen. Wegen der extrem kurzen Gel- und Füllzeiten sind diese Systeme zur Herstellung sehr dünner Formteile nicht optimal geeignet. Beispielsweise ist eine Grossserienfertigung von reversibel verformbaren Front- und Heckpartien von Kraftfahrzeugen nicht durchführbar, weil häufig auf unvollständige Füllung der Form zurückzuführende Fehlstellen in den Teilen auftreten. Dies trifft insbesondere dort zu, wo die Reaktionsspritzgussmaschinen, die gegenwärtig erhältlich sind, verwendet werden. Obwohl es möglich wäre, die vorerwähnten Nachteile der Amin-verlängerten Systeme durch die Verwendung spezieller Reaktionsspritzgussmaschinen mit beträchtlich erhöhter Leistung zu kompensieren, so würde eine solche Massnahme erhebliche zusätzliche Kapitalinvestitionen in die Betriebsanlagen erfordern. Darüber hinaus würde sie nicht zur Lösung der Probleme der grossen Dichtegradienten und/oder der Einsackstellen beitragen, die üblicherweise bei dem derzeit bekannten Reaktionsspritzgiessen (RIM) Amin-verlängerter Systeme auftreten.

Ein Ziel der vorliegenden Erfindung ist die Verbesserung der Systeme nach der DE-OS 2 622 951 (GB-PS 1 534 258) in einer solchen Weise, dass es möglich und auch praktisch durchführbar ist, grossvolumige, dünnwandige Formteile mit einem Gewicht bis hinauf zu 10 kg unter Benutzung der verfügbaren Reaktionsspritzgussmaschinen in Grossserie herzustellen. Dieses Ziel wird gemäss der vorliegenden Erfindung im einzelnen dadurch erreicht, dass die Gelzeit vergrössert und die Geschwindigkeit der Viskositätszunahme der Amin-verlängerten Systeme, auf die

oben verwiesen wurde, verkleinert wird, ohne dass gleichzeitig die erforderliche kurze Verweilzeit in der Form dadurch nennenswert beinflusst wird. Die weiteren Ziele, nämlich die Feuchtigkeitsabsorption niedrig zu halten und die Neigung zur Bildung von Einsackstellen zu verringern, wird in der vorliegenden Erfindung mit Hilfe der verwendeten speziellen Polyol-Gemische erreicht. Ein anderes Ziel der vorliegenden Erfindung ist die Verbesserung der physikalischen Eigenschaften der Formerzeugnisse (d.h. Festigkeit in unvulkanisiertem Zustand (green strength), Flexibilität bei tiefen Temperaturen).

Die Verwirklichung der gesteckten Ziele gemäss der vorliegenden Erfindung ist überraschend, weil zunächst erwartet worden war, dass die Gelzeit weitgehend durch die reaktionsfähigere Amin-Komponente und nicht durch die Natur der Hydroxyl-Gruppen des Polyethers bestimmt werden würde. Insbesondere war unerwartet, dass nur Polyether-polyole, die eingearbeitete Ethylenoxid-Einheiten enthalten, die geforderte Wirkung hervorrufen würden. Überraschenderweise wurde gefunden, dass entsprechende Polyether-polyole mit demselben Gehalt an sekundären Hydroxyl-Gruppen, jedoch ohne die eingearbeiteten Ethylenoxid-Einheiten und/oder einpolymerisierte Ethylenoxid-Block-Einheiten nicht das geforderte Ergebnis zeitigten. Es ist ebenfalls überraschend, dass Polyol-Gemische überhaupt in der gewünschten Weise wirken, und erst recht, dass sie in ihrer Wirkung derartig vorzüglich sind. Die Systeme gemäss der DE-OS 2622951, die aufgrund ihrer mechanischen Eigenschaften eine ideale Eignung für die Herstellung grossvolumiger, biegsamer Kraftfahrzeug-Karosseriebauteile (Elemente mit «elastischer Aufprallfläche» [«soft face»]) mitbringen, weisen beispielsweise eine Gelzeit von angenähert zwei Sekunden auf und liefern Formteile, die nach einer Dauer von einer halben bis ganzen Minute von der Form getrennt werden können. Durch die Verwendung der Polyether-Polyol-Gemische gemäss der vorliegenden Erfindung in einer sonst gleichen Formulierung ist es möglich, die Geschwindigkeit der Viskositätszunahme zu verkleinern und dadurch die Fliesszeit zu vergrössern.

Aus der vorveröffentlichten Literatur ist es zwar bereits bekannt, bei der Herstellung von Polyurethanschaumstoffen Gemische von unterschiedlichen Polyetherpolyolen einzusetzen, jedoch beinhalten die einschlägigen Literaturstellen keinerlei richtungsweisenden Hinweis auf die erfindungsgemäss aufgefundenen Zusammenhänge, da sie a) andere Polyolgemische als die nachstehend beschriebenen, erfindungswesentlichen Polyolgemische empfehlen, und da sie b) sich überhaupt nicht mit dem Problem der Herstellung von Formkunststoffen auf Polyurethan-Polyharnstoff-Basis mittels der Reaktionsspritzgiess-Technik befassen. So beschreibt beispielsweise die GB-A 1089140 Gemische von Polyetherpolyolen, die insbesondere zur Herstellung von freigeschäumten Weichschaumstoffen geeignet sind, und die Abmischungen aus (i) Polyoxypropylen-Polyether-Polyolen mit endständigen Hydroxyethoxy-Einheiten mit (ii) reinen Polyoxypropylen-Polyolen darstellen. Polyetherpolyole mit endständigen Hydroxypropoxy-Einheiten, die im Block Polyoxyethylen-Einheiten aufweisen, und wie erfindungsgemäss als Komponente (C) eingesetzt werden, finden keine Erwähnung in der Vorveröffentlichung.

Die DE-A 2461363 befasst sich ebenfalls ausschliesslich mit der Herstellung von freiverschäumten flexiblen Polyurethanschaumstoffen, wobei als Polyetherpolyole ähnliche Gemische wie im Fall der GB-A 1089140 verwendet werden, wobei auch hier keinerlei Hinweis auf Einzelkomponenten der Art der erfindungswesentliche Komponente (C) zu finden ist.

Die DE-B 2156477 (Beispiel 1) befasst sich mit der Herstellung von Formschaumstoffen nach dem Prepolymerprinzip, wobei zunächst ein Gemisch aus NCO-Prepolymeren hergestellt und anschliessend mit einer Zweitkomponente, bestehend aus Diamin-Kettenverlängerer, Stabilisator, Katalysator und Treibmittel, vermischt wird. Bei der Herstellung der NCO-Prepolymeren werden ebenfalls Polyetherpolyol-Gemische eingesetzt, jedoch erneut solche, die keinerlei Einzelkomponente der Art der erfindungswesentlichen Komponente (C) enthalten.

Gegenstand der Erfindung ist ein Verfahren zur Herstellung von gegebenenfalls zellförmigen elastischen, geformten Gegenständen, die eine wasserdichte Oberflächenschicht aufweisen, aus Polyurethan-Polyharnstoff-Elastomeren durch Umsetzung einer Reaktionsmischung aus

(A) organischen Polyisocyanaten und

(B) di- oder höherfunktionellen Polyoxyalkylenpolyolen mit mehr als 50% primäre Hydroxylgruppen aufweisenden Hydroxyethoxy Endgruppen (bezogen auf die Gesamtzahl der vorliegenden, Hydroxylgruppen aufweiden Endgruppen), einer Hydroxylzahl von 22–35, einem Ethylenoxid-Gesamtgehalt von 12–22 Gew.% (bezogen auf die Gesamtmenge des anwesenden Alkylenoxids) und einem mittleren Molekulargewicht von 3205,7 bis 12000,

(C) di- oder höherfunktionellen Polyoxyalkylenpolyolen mit 80 bis 100% sekundäre Hydroxylgruppen aufweisenden Hydroxypropoxy Endgruppen (bezogen auf die Gesamtmenge der vorliegenden Endgruppen),

(D) Katalysatoren und/oder Kombinationen von Katalysatoren, darunter Organozinnverbindungen und/oder tertiäre Amine,

(E) Amin-Kettenverlängerern, die in jedem beliebigen Verhältnis mit den Bestandteilen (B) und (C) mischbar sind, und gegebenenfalls,

(F) Treibmitteln, oberflächenaktiven Mitteln und/oder Mitteln zur Steigerung der Fliessfähigkeit, wobei diese Reaktionsmischung als

System in einem Direktverfahren mittels der Reaktionsspritzgiess-(RIM)-Technik verarbeitet wird und die Reaktionspartner in Mengen verwendet werden, die einem Isocyanat-Index von 70 bis 130 entsprechen, dadurch gekennzeichnet, dass man als Polyole (C) solche verwendet, die in dem einpolymerisierten Block des Polyos Oxyethylen-Segmente in einer Menge von 15 bis 60 Gew.% (bezogen auf die Gesamtmenge des anwesenden Alkylenoxids) enthalten und eine Hydroxylzahl von 22 bis 35 und ein mittleres Molekulargewicht von 3205,7 bis 12 000 besitzen, und der Polyolbestandteil ein Gemisch aus (B) und (C) im Gewichtsverhältnis von 1:9 bis 9:1 ist.

Für die Verwendung gemäss der vorliegenden Erfindung geeignete Komponenten (A) sind aliphatische, cycloaliphatische, araliphatische, aromatische und heterocyclische Polyisocyanate des Typs, wie sie beispielsweise von W. Siefken, Justus Liebigs Annalen der Chemie 562, Seiten 75 bis 136, beschrieben werden. Spezielle Beispiele für diese Verbindungen sind Ethylendiisocyanat, 1,4-Tetramethylendiisocyanat, 1,6-Hexamethylendiisocyanat, 1,12-Dodecan-diisocyanat, Cyclobutan-1,3-diisocyanat, Cyclohexan-1,3- und 1,4-diisocyanat und Gemische dieser Isomeren. Zusätzliche Beispiele sind 1-Isocyanato-3,3,5-trimethyl-5-isocyanato-methylcyclohexan (DE-AS 1 202 785; US-PS 3 401 190), 2,4- und 2,6-Hexahydrotolylen-diisocyanat und Gemische dieser Isomeren. Hexahydro-1,3- und/oder -1,4-phenylendiisocyanat, Perhydro-2,5′- und/oder 4,4′-diphenylmethan-diisocyanat, 1,3- und 1,4-Phenylendiisocyanat, 2,4- und 2,6-Tolylendiisocyanat und Gemische dieser Isomeren sind ebenfalls für die Verwendung gemäss der vorliegenden Erfindung geeignet. Diphenylmethan-2,4′- und/oder 4,4′-diisocyanat, Naphthylen-1,5-diisocyanat, Triphenylmethan-4,4′,4″-Triisocyanat, Polyphenyl-polymethylen-polyisocyanate des Typs, wie sie durch Kondensation von Anilin mit Formaldehyd und nachfolgende Phosgenierung erhalten werden und z.B. in den GB-PSen 874 430 und 848 671 beschrieben wurden, können in der vorliegenden Erfindung ebenfalls eingesetzt werden. m- und p-Isocyanato-phenylsulfonyl-isocyanate gemäss der US-PS 3 454 606, perchlorierte Arylpolyisocyanate des z.B. in der DE-AS 1 157 601 (US-PS 3 277 138) beschriebenen Typs, Carbodiimid-Gruppen enthaltende Polyisocyanate des in der DE-PS 1 902 007 (US-PS 3 152 162) beschriebenen Typs, Diisocyanate des in der US-PS 3 492 330 beschriebenen Typs und Allophanat-Gruppen enthaltende Polyisocyanate der Typen, wie sie z.B. in der GB-PS 993 890, in der BE-PS 761 626 und in der NL-AS 7 102 524 beschrieben wurden, sind noch weitere Beispiele für geeignete Verbindungen (A). Darüber hinaus sind auch Isocyanurat-Gruppen enthaltende Polyisocyanate der Typen, wie sie z.B. in der US-PS 3 001 973, den DEP-Sen 1 022 789, 1 222 067 und 1 027 394 und in den DE-OSen 1 929 034 und 2 004 408 beschrieben werden, Urethan-Gruppen enthaltende Polyisocyanate der z.B. in der BE-PS 752 261 oder in der US-PS 3 394 164 beschriebenen Typen, acylierte Harnstoff-Gruppen enthaltende Polyisocyanate gemäss der DE-PS 1 230 778 sowie Biuret-Gruppen enthaltende Polyisocyanate der z.B. in der DE-PS 1 101 394 (US-PSen 3 124 605 und 3 201 372) und in der GB-PS 889 050 beschriebenen Typen als jeweilige Komponente (A) geeignet.

Polyisocyanate, die durch Telomerisationsreaktionen des z.B. in der US-PS 3 654 106 beschriebenen Typs hergestellt werden, Ester-Gruppen enthaltende Polyisocyanate des z.B. in den GB-PSen 965 474 und 1 072 956, in der US-PS 3 567 763 und in der DE-PS 1 231 688 beschriebenen Typs, Reaktionsprodukte aus den vorgenannten Isocyanaten mit Acetalen gemäss der DE-PS 1 072 385 und polymere Fettsäurereste enthaltende Polyisocyanate gemäss der US-PS 3 455 883 sind noch weitere zur Verwendung gemäss der vorliegenden Erfindung geeignete Komponenten (A).

Aromatische Polyisocyanate, die bei der Verarbeitungstemperatur flüssig sind, werden vorzugsweise als Komponenten (A) eingesetzt. Zu den besonders bevorzugten Ausgangsverbindungen (A) gehören Derivate des 4,4′-Diisocyanato-diphenylmethans, die bei Raumtemperatur flüssig sind, zum Beispiel Urethan-Gruppen enthaltende flüssige Polyisocyanate des gemäss der DE-PS 1 618 380 (US-PS 3 644 457) erhältlichen Typs. Diese können beispielsweise durch Umsetzung von 1 Mol 4,4′-Diisocyanato-diphenylmethan mit 0,05 bis 0,3 Mol Diolen oder Triolen mit niederem Molekulargewicht, vorzugsweise Polypropylenglykolen mit einem Molekulargewicht unterhalb von 700, oder Diisocyanaten auf Diphenylmethan-diisocyanat-Basis, die Carbodiimid- und/oder Ureton-Imin-Gruppen enthalten und dem beispielsweise gemäss der DE-PS 1 092 007 (US-PS 3 152 162) erhältlichen Typ entsprechen, hergestellt werden. Mischungen aus diesen bevorzugten Polyisocyanaten werden ebenfalls bei der Anwendung bevorzugt. Im allgemeinen sind aliphatische und cycloaliphatische Isocyanate für die Zwecke der vorliegenden Erfindung weniger gut geeignet.

Der Bestandteil (B) ist ein zwei- oder höherwertiger Hydroxy-Polyether mit einem mittleren Molekulargewicht von 3205,7 bis 12 000, vorzugsweise von 3205,7 bis 8000. Das mittlere Molekulargewicht kann beispielsweise aufgrund des Hydroxyl-Gehalts und der mittleren Funktionalität berechnet werden. Von 12 bis 22 Gew.% der Gesamt-Oxidmenge der Polyether-Ketten bestehen aus Ethylenoxid-Einheiten. Zusätzlich zu den Ethylenoxid-Einheiten enthalten die Polyether-Ketten vorzugsweise Propylenoxid-Einheiten. Der Gehalt an eingearbeiteten Ethylenoxid-Einheiten kann beispielsweise mittels einer NMR-Analyse bestimmt werden. Der Gehalt an sekundären Hydroxyl-Gruppen kann nach Acetylierung ebenfalls mittels bekannter Methoden der NMR-Analyse bestimmt werden. Diese Verbindungen besitzen eine Hydroxylzahl von 22 bis 35, vorzugsweise ca. 28.

Die Polyhydroxy-polyether der vorliegenden Erfindung werden in bekannter Weise durch Alkoxylierung geeigneter Starter-Moleküle hergestellt. Die Ethylenoxid-Einheiten werden eingearbeitet durch Zusatz von Ethylenoxid oder Mischungen von Ethylenoxid mit anderen Epoxiden, vorzugsweise Propylenoxid. Andere als die vorerwähnten Epoxide können ebenfalls zur Herstellung der Polyhydroxy-polyether der vorliegenden Erfindung verwendet werden, vorausgesetzt, dass die dabei erhaltenen Polyhydroxy-polyether der oben gegebenen Definition entsprechen. Geeignete Starter-Komponenten sind die konventionellen Verbindungen mit niedrigem Molekulargewicht, die aktive Wasserstoff-Atome enthalten, wie z.B. Wasser, Ammoniak, Alkohole oder Amine. Einige geeignete Beispiele sind Glycerin, Ethylenglycol, 1,3-Propylenglycol oder 1,2-Propylenglycol, Trimethylolpropan, 4,4′-Dihydroxy-diphenylpropan, Anilin, Ethanolamin oder Ethylendiamin. Saccharose-Polyether des beispielsweise in den DE-ASen 1 176 358 und 1 064 938 beschriebenen Typs können ebenfalls in der vorliegenden Erfindung verwendet werden. Die Polyhydroxy-polyether und/oder Polyhydroxy-polyether-Gemische besitzen vorzugsweise eine mittlere OH-Funktionalität von 2 bis 4, vorzugsweise 3.

Es ist auch möglich, Polyether entsprechend der obigen Definition zu verwenden, die nachfolgend in bekannter Weise modifiziert wurden. Zu diesen modifizierten Polyethern gehören beispielsweise durch Vinyl-Polymere modifizierte Polyether des beispielsweise durch die Polymerisation von Styrol und Acrylnitril in Gegenwart von Polyethern gebildeten Typs (US-PSen 3 383 351; 3 304 273; 3 523 093 und 3 110 695 sowie DE-PS 1 152 536). Andere geeignete Typen modifizierter Polyether sind diejenigen Polyhydroxyl-Verbindungen, die Polyaddukte oder Polykondensate mit hohem Molekulargewicht in feindisperser oder gelöster Form enthalten. Derartige modifizierte Polyhydroxyl-Verbindungen werden dadurch erhalten, dass in den vorerwähnten, Hydroxyl-Gruppen enthaltenden Verbindungen unmittelbar in situ Polyadditionsreaktionen (beispielsweise Reaktionen zwischen Polyisocyanaten und amino-funktionellen Verbindungen) oder Polykondensationsreaktionen (beispielsweise zwischen Formaldehyd und Phenolen und/oder Aminen) durchgeführt werden. Solche Verfahren werden beispielsweise in den DE-ASen 1 168 075 und 1 206 142 sowie in den DE-OSen 2 324 134, 2 423 984, 2 550 796, 2 512 385, 2 513 815, 2 550 797, 2 550 833 und 2 550 862 beschrieben. Es ist jedoch ebenfalls möglich, gemäss der US-PS 3 869 413 oder der DE-OS 2 550 860 eine wässrige Polymerisat-Dispersion mit einer Polyhydroxyl-Verbindung zu vermischen und anschliessend das Wasser aus der Mischung zu entfernen.

Die Verbindung (C) ist ein Polyhydroxy-polyether mit einem mittleren Molekulargewicht von 3205,7 bis 12 000, vorzugsweise von 3205,7 bis 8000. Diese Hydroxypropoxy-Endgruppen aufweisenden di- oder mehrfunktionellen Polyetherpolyole enthalten in dem einpolymerisierten Block des Polyols Ethylenoxid-Segmente in einer Menge von 15 bis 60 Gewichts-%, vorzugsweise 17 bis 38% und besonders bevorzugt ca. 27%, bezogen auf die Gesamtmenge an Oxid. Praktisch besteht der gesamte restliche Anteil an dem Bestandteil (C) aus einem von Polyoxyethylen verschiedenen Polyoxyalkylen. Diese Verbindungen besitzen eine Hydroxylzahl von 22 bis 35, vorzugsweise ca. 25, und vorzugsweise eine mittlere OH-Funktionalität von 2 bis 4, besonders bevorzugt von 3.

Die Polyhydroxy-polyether, Bestandteil (C), der vorliegenden Erfindung werden in bekannter Weise hergestellt. Eine dieser bekannten Methoden besteht beispielsweise darin, dass ein Initiator (d.h. Glycerin und/oder Propylenglycol) mit einer Mischung aus Propylenoxid und Ethylenoxid (die von 15 bis 60 Gewichts-% Ethylenoxid, bezogen auf die Gesamtmenge des in dem Polyol-Endprodukt vorliegenden Oxids, enthält) zur Reaktion gebracht wird und das erhaltene Produkt mit Propylenoxid weiter umgesetzt wird, wodurch der Einbau von Hydroxypropoxy-Endgruppen bewirkt wird. Ein weiteres Beispiel ist beispielsweise, die Umsetzung eines Initiators (Glycerin und/oder Propylenglycol) mit Ehtylenoxid und nachfolgende weitere Umsetzung des erhaltenen Produkts mit Propylenoxid.

Noch ein anderes Beispiel ist die Reaktion eines Initiators (Glycerin und/oder Propylenglycol) mit Propylenoxid und anschliessende Reaktion des Produkts mit Ethylenoxid, gefolgt von der Reaktion des letzteren Reaktionsprodukts mit Propylenoxid zur Einführung der Hydroxypropoxy- Endgruppen. Alternativ dazu können diese Polyhydroxypolyether, Komponente (C), beispielsweise durch Reaktion eines Polyols mit niederem Molekulargewicht (wobei dies Polyol einen Initiator mit bereits vorhandenem Propylenoxid enthält) mit Ethylenoxid und nachfolgende Reaktion des Produkts mit Propylenoxid zur Einführung der Hydroxypropoxy-Endgruppen hergestellt werden. Ebenfalls geeignet ist die Umsetzung eines Polyols mit niederem Molekulargewicht (wobei dieses Polyol einen Initiator mit bereits vorhandenem Ethylenoxid enthält) mit Propylenoxid zur Einführung der Hydroxypropoxy-Endgruppen. Eine andere geeignete Methode ist die Reaktion eines Polyols mit niederem Molekulargewicht (wobei dieses Polyol einen Initiator mit entweder bereits vorhandenem Ethylenoxid oder bereits vorhandenem Propylenoxid enthält) mit einer Mischung aus Ethylenoxid und Propylenoxid (die 15 bis 60% Ethylenoxid, bezogen auf die Gesamtmenge des in dem Polyol-Endprodukt vorliegenden Oxids, enthält) und nachfolgende Reaktion des Produkts mit Propylenoxid zur Einführung der Hydroxypropoxy-Endgruppen.

Geeignete Initiatoren zur Herstellung eines Polyether-polyols sind die üblichen Verbindungen mit niedrigem Molekulargewicht, die aktive Wasserstoff-Atome enthalten, wie Wasser, Ammoniak, Alkohole und Amine. Einige geeignete Beispiele sind Glycerin, Ethylenglycol, 1,3-Propylenglycol oder 1,2-Propylenglycol, Trimethylolpropan, 4,4′-Dihydroxydiphenylpropan, Anilin, Ethanolamin oder Ethylendiamin. Saccharose-Polyether des beispielsweise in den DE-ASen

1 176 358 und 1 064 938 beschriebenen Typs können ebenfalls in der vorliegenden Erfindung verwendet werden. Die Polyhydroxy-polyether und/oder Polyhydroxy-polyether-Mischungen weisen vorzugsweise eine mittlere OH-Funktionalität von 2 bis 4, vorzugsweise von 3 auf.

Es ist auch möglich, der obigen Definition entsprechende Polyether zu verwenden, die anschliessend in bekannter Weise modifiziert wurden. Zu diesen modifizierten Polyethern gehören beispielsweise durch Vinyl-Polymere modifizierte Polyether des beispielsweise durch die Poylmerisation von Styrol und Acrylnitril in Gegenwart von Polyethern gebildeten Typs (US-PSen 3 383 351, 3 304 273, 3 523 093 und 3 110 695 sowie DE-PS 1 152 536). Andere geeignete Typen modifizierter Polyether sind diejenigen Polyhydroxyl-Verbindungen, die Polyaddukte oder Polykondensate mit hohem Molekulargewicht in feindisperser oder gelöster Form enthalten. Derartige modifizierte Polyhydroxyl-Verbindungen werden dadurch erhalten, dass in den vorerwähnten, Hydroxyl-Gruppen enthaltenden Verbindungen unmittelbar in situ Polyadditionsreaktionen (beispielsweise Reaktionen zwischen Polyisocyanaten und aminofunktionellen Verbindungen) oder Polykondensationsreaktionen (beispielsweise zwischen Formaldehyd und Phenolen und/oder Aminen) durchgeführt werden. Solche Verfahren werden beispielsweise in den DE-ASen 1 168 075 und 1 260 142 sowie in den DE-OSen 2 324 138, 2 423 984, 2 512 385, 2 513 815, 2 500 796, 2 550 797, 2 550 833 und 2 550 862 beschrieben. Es ist jedoch ebenfalls möglich, gemäss der US-PS 3 869 413 oder der DE-OS 2 500 860 eine wässrige Polymerisat-Dispersion mit einer Polyhydroxyl-Verbindung zu vermischen und anschliessend das Wasser aus der Mischung zu entfernen.

Es ist von diesen Amin-verlängerten Systemen bekannt, dass die Erhöhung des Ethylenoxid-Gehalts in dem einpolymerisierten Block des Polyols mit endständigen Hydroxypropoxyeinheiten zu einer verbesserten Festigkeit unvulkanisiertem Zustand (green strength) sowie zu erhöhter Wasserabsorption führt. Gleichermassen ist allgemein bekannt, dass die Erniedrigung des Ethylenoxid-Gehalts in dem einpolymerisierten Block des Polyols mit endständigen Hydroxypropoxyeinheiten zu einer geringeren Festigkeit in unvulkanisiertem Zustand (green strength) sowie zu geringerer Wasserabsorption führt. Überraschenderweise wurde gefunden, dass ein Ethylenoxid-Gehalt von 15 bis 60 Gewichts-%, bezogen auf die Gesamtmenge an Oxid, in dem gemischten Block-Polyether-polyol mit enständigen Hydroxyethoxyeinheiten annehmbare Werte für die Festigkeit in unvulkanisiertem Zustand (green strength) und für physikalische Eigenschaften wie den Biegeelastizitätsmodul ergibt. Weiterhin wurde überraschenderweise gefunden, dass ein Gesamtgehalt an Ethylenoxid von ca. 12 Gewichts-% in dem Polyurethan-Polymer-Endprodukt annehmbare Eigenschaften in bezug auf eine niedrige Wasserabsorption ergibt. Ebenfalls überraschenderweise wurde gefunden, dass Polyole, die Ethylenoxid in dem einpolymerisierten Block des Polyols mit endständigen Hydroxypropoxyeinheiten enthalten, sich vorteilhaft mit solchen Polyolen vermischen liessen, die eine Hydroxyethoxy-Endgruppe enthalten, d.h. Polyolen mit Propylenoxid in dem einpolymerisierten Block und mit Hydroxyethoxy-Endgruppen oder Polyole mit Oxid-Gemisch im einpolymerisierten Block und mit endständigen Hydroxyethoxyeinheiten. Unter «endständigen Hydroxyethoxy- bzw. Hydroxypropoxy-Einheiten» sind Struktureinheiten der Formeln

$$-O\{CH_2-CH_2\}_nH$$

$$-O\{CH_2-\underset{|}{\overset{CH_3}{C}}H-O\}_nH$$

(n = 1 oder eine Zahl > 1) zu verstehen.

Die erfindungswesentliche Komponente (B) enthält mehr als 50%, vorzugsweise 80-100% derartige, primäre Hydroxylgruppen aufweisende Endgruppen, bezogen auf die Gesamtzahl der vorliegenden, Hydroxylgruppen aufweisenden Endgruppen, d.h. eine entsprechende Menge an primären Hydroxylgruppen, bezogen auf alle vorliegenden Hydroxylgruppen. Die erfindungswesentliche Komponente (C) enthält 80–100% derartige, sekundäre Hydroxylgruppen aufweisende Endgruppen, bezogen auf die Gesamtmenge der vorliegenden Endgruppen, d.h. eine entsprechende Menge an sekundären Hydroxylgruppen, bezogen auf die Gesamtmenge der vorliegenden Hydroxylgruppen. Dies kann beispielsweise dadurch erreicht werden, dass bei der Alkoxylierungsreaktion zur Herstellung der Polyätherpolyole am Ende mindestens 1 Mol reines Propylenoxid pro Mol Hydroxylgruppen zum Einsatz gelangt.

Das Mengenverhältnis der Komponente (B) zu der Komponente (C) wird derart bemessen, dass der Gesamt-Ethylenoxid-Gehalt des fertigen Formteils aus dem Polymer auf einem Wert unterhalb von 12% gehalten wird, damit Formteile mit annehmbaren Eigenschaften in bezug auf die Wasserabsorption erzeugt werden. Unter Berücksichtigung dessen kann das Verhältnis der Komponente (B) zu der Komponente (C) auf Gewichtsbasis im Bereich von 1:9 bis 9:1 variiert werden. Vorzugsweise erstreckt sich dieses Verhältnis von 4:1 bis 1:4, und besonders bevorzugt ist der Bereich von 2:1 bis 1:2. Bekannt ist der Zusatz der Gesamtmenge in Form der Komponente (B) unter Verzicht auf die Komponente (C). Der Schlüssel zu der vorliegenden Erfindung liegt jedoch darin, eine gewisse Menge der Komponente (C) hinzuzufügen, um stark erhöhte Gelzeiten zu erzielen, während gleichzeitig dem fertigen Polymer die Eigenschaft der niedrigen Wasserabsorption erhalten bleibt. Der Gesamt-Ethylenoxid-Gehalt wurde dahingehend entwickelt, dass eine wünschenswerte optimale Kombination aus niedriger Wasserabsorption, Festigkeit in unvulkanisiertem Zustand (green strength) und physikalischen Eigenschaften erhalten und gleichzeitig die Gelzeit erhöht wurde. Die Optimierung aller dieser gewünschten Parameter bei stark erhöhten Gelzeiten war bisher mit den bekannten Amin-verlängerten Systemen nicht erreichbar. Die Möglichkeit, sämtliche dieser Parameter zu optimieren und die Gelzeiten zu erhöhen, war deshalb überraschend im Lichte der Amin-verlängerten Systeme gemäss dem Stand der Technik. Ebenfalls überraschenderweise wurde gefunden, dass Diole nicht so gute physikalische Eigenschaften bei tiefen Temperaturen ergeben wie tri- und höherfunktionelle Polyole. Dies verdeutlicht ein Vergleich der Beispiele 12 und 13, in denen Polyol-Gemische, die über 22% difunktionellen Polyether (d.h. Polyol D) enthielten, die Biegeprüfung bei -29°C (-20°F) nicht bestanden, mit dem Beispiel 11, in dem ein Polyol-Gemisch mit weniger als 22% difunktionellen Polyethern, und den Beispielen 14 bis 18, in denen Polyol-Gemische ohne difunktionellen Polyether-Anteil jeweils die Biegeprüfung bei -29°C (-20°F) bestanden. Für Anwendungen bei tiefen Temperaturen werden trifunktionelle Polyether bevorzugt. Überraschenderweise wurde gefunden, dass der Einsatz difunktioneller Polyether in einer Menge von etwa 20 Gewichts-% in dem Polyol-Gemisch die Anwendung grösserer Mengen des Zinn-Katalysators erforderte, damit, im Vergleich zu höherfunktionellen Polyolen, die gute Festigkeit in unvulkanisiertem Zustand (green strength) erhalten blieb.

Es ist ausserdem erforderlich, geeignete Katalysator-Komponenten (D) für die Reaktion zwischen den Isocyanat-Gruppen und den Hydroxyl-Gruppen anzuwenden. Ohne diese Katalysatoren-Komponenten (D) ist es nicht möglich, Formteile mit technisch interessanten mechanischen Eigenschaften innerhalb von kurzen Verweilzeiten in der Form zu erhalten. Geeignete Katalysatoren sind beispielsweise die in der DE-OS 2 622 951 erwähnten Katalysatoren. Bevorzugt werden bekannte organo-metallische Katalysatoren insbesondere Organozinn-Katalysatoren verwendet.

Zu den bevorzugten Katalysatoren gehören Organozinn-Verbindungen und unter diesen beispielsweise Dibutylzinn-dilaurat, Dibutylzinn(IV)-dilaurylmercaptid, Dioctylzinn(IV)-dilaurylmercaptid, Zinn(II)-dilaurylmercaptid und Dibutylzinn-diacetylacetonat. Mit den letztegenannten Verbindungen ist es möglich, die Füllzeit weiter zu verlängern. In diesem Zusammenhang ist es besonders überraschend und gerade für Fachleute tatsächlich unerklärlich, dass durch Erhöhung der Konzentration eines Katalysators längere Füllzeiten erzielt werden. Die besonders bevorzugten Organozinn-Verbindungen sind Dibutylzinn-dilaurat und Dibutylzinn-dilaurylmercaptid.

Zusätzlich zu den organometallischen Katalysatoren ist es ebenfalls möglich, tertiäre Amin-Katalysatoren zu verwenden. Beispiele für geeignete tertiäre Amine sind N-Methylmorpholin, N,N,N',N'-Tetramethyl-ethylendiamin, Triethylendiamin, N,N-Dimethylbenzylamin, 2-Methyl-1,4-diazabicyclo(2.2.2)-octan, 2-Methylimidazol und 2,3-Dimethyl-tetrahydropyrimidin. Die bevorzugten tertiären Amine sind 2,3-Dimethyl-tetrahydropyrimidin und/oder 1,4-Diazabicyclo(2.2.2)-octan.

Andere Beispiele für bei der Anwendung der vorliegenden Erfindung zu verwendende Katalysatoren sowie Einzelheiten über die Arbeitsweise der Katalysatoren sind beschrieben in dem «Kunststoff-Handbuch», Band VII, herausgegeben von Vieweg und Hochtlen, Carl-Hanser-Verlag, München, 1966, z.B. auf den Seiten 96 bis 102.

Die Katalysatoren werden im allgemeinen in einer Menge von 0,001 bis 10 Gewichts-%, vorzugsweise von 0,05 bis 2 Gewichts-%, bezogen auf die Gesamtmenge der Bestandteile (B), (C), (D), (E) und (F), verwendet.

Das kettenverlängernde Mittel (E) wird in Mengen von 5 bis 50 Gewichts-%, unter besonderer Bevorzugung von 12 bis 30 Gewichts-% bezogen auf die Gesamtmenge der Bestandteile (B), (C), (D), (E) und (F), verwendet.

Aromatische Amine, die entweder für sich allein oder in Gemischen als kettenverlängernde Mittel (E) Verwendung finden können, sind beispielsweise 2,4-und 2,6-Diaminotoluol, 2,4'- und/oder 4,4'-Diamino-diphenylmethan, 1,2- und 1,4-Phenylendiamin, Naphthylen-1,5-diamin und Triphenylmethan-4,4',4''-triamin. Die difunktionellen und polyfunktionellen aromatischen Amin-Verbindungen können ebenfalls ausschliesslich oder teilweise sekundäre Amino-Gruppen enthalten, so wie beispielsweise 4,4',Di(methyl-amino)-diphenylmethan oder 1-Methyl-2-methylamino-4-)aminobenzol. Flüssige Mischungen von Polyphenyl-polymethylen-polyaminen von der Art, wie sie durch Kondensation von Anilin mit Formaldehyd erhalten werden, sind ebenfalls geeignet.

Als besonders geeignet für das vorliegende Verfahren haben sich flüssige oder gelöste aromatische Diamine erwiesen, die mindestens einen linearen oder verzweigten Alkyl-Substituenten in der o-Stellung zu der ersten Amino-Gruppe und zwei lineare oder verzweigte Alkylsubstituenten mit von 1 bis 3 Kohlenstoff-Atomen in der o-Stellung zu der zweiten Amino-Gruppe enthalten. Solche aromatischen Diamine sind beispielsweise 1,3-Diethyl-2,4-diamino-benzol, 2,4-Diamino-mesitylen, 1-Methyl-3,5-diethyl-2,4-diamino-benzol, 1-Methyl-3,5-diethyl-2,6-diamino-benzol, 1,3,5-Triethyl-2,4-(oder 2,6)-diaminobenzol, 3,5,3',5'-Tetraethyl-4,4'-diamino-diphenylmethan oder 3,5,3',5'-Tetraisopropyl-4,4'-diaminodiphenylmethan. Bevorzugt wird ein Gemisch von 1-Methyl-3,5-diethyl-2,4-diamino-benzol und 1-Methyl-3,5-diethyl-2,6-diaminobenzol in einem Mengenverhältnisbereich zwischen 50:50 und 85:15. Besonders bevorzugt verwendet wird eine Mischung aus etwa 65 Gewichts-% 1-Methyl-3,5-diethyl-2,4-diamino-benzol und etwa 35 Gewichts-% 1-Methyl-3,5-diethyl-2,6-diamino-benzol.

Die oben genannten aromatischen Diamine

können natürlich auch in Gemischen miteinander und in Verbindung mit anderen aktiven aromatischen Diaminen verwendet werden.

Kompakte Formteile können ohne Verwendung von Treibmitteln hergestellt werden. Es ist jedoch möglich, Treibmittel zu verwenden. So können Wasser und/oder leicht flüchtige organische Verbindungen als Treibmittel (F) verwendet werden. Beispiele für geeignete organische Treibmittel sind Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan und ebenfalls Butan, Hexan, Heptan oder Diethylether.

Eine Treibwirkung kann auch dadurch erzielt werden, dass Verbindungen zugesetzt werden, die sich bei Temperaturen oberhalb der Raumtemperatur unter Entwicklung von Gasen wie z.B. Stickstoff zersetzen. Ein Beispiel für diese Art von Verbindungen ist eine Azoverbindung, wie z.B. Azoisobuttersäurenitril. Weitere Beispiele für Treibmittel sowie Hinweise zur Verwendung von Treibmitteln finden sich in dem «Kunststoff-Handbuch», Band VII, von Vieweg und Hochtlen, Carl-Hanser-Verlag, München, 1966, z.B. auf den Seiten 108 und 109, 453 bis 455 und 507 bis 510.

Die durch diese konventionellen Treibmittel erzeugte Treibwirkung ist geringfügig im Vergleich zu nicht-amin-verlängerten Systemen. Jedoch steigert die Anwendung von Treibmitteln die Fliesseigenschaften der vorliegend beanspruchten Systeme ebenso, wie sie im allgemeinen eine leichte Treibwirkung hervorruft.

Es ist auch möglich, oberflächenaktive Zusatzstoffe zu verwenden (Emulgatoren und Schaumstabilisatoren). Beispiele für geeignete Emulgatoren sind die Natriumsalze von Rizinusöl-sulfonaten oder sogar von Fettsäuren oder die Salze von Fettsäuren mit Aminen wie Diethylaminoleat oder Diethanolaminstearat. Alkalimetall- oder Ammoniumsalze von Sulfonsäuren wie Dodecylbenzolsulfonsäure oder Dinaphthyl-methandisulfonsäure, oder sogar von Fettsäuren wie Rizinolsäure oder von polymeren Fettsäuren können ebenso als oberflächenaktive Zusatzstoffe verwendet werden.

Geeignete Schaumstabilisatoren sind vor allem wasserlösliche Polyether-siloxane. Die Struktur dieser Verbindungen ist im allgemeinen eine solche, bei der ein Copolymerisat aus Ethylenoxid und Propylenoxid mit einem Polydimethylsiloxan-Radikal verknüpft ist. Derartige Schaumstabilisatoren sind beispielsweise in US-PS 2 764 565 beschrieben.

Es ist ebenfalls möglich, bekannte Zell-Reglersubstanten, wie Paraffine oder Fettalkohole, und bekannte Flammschutzmittel, wie beispielsweise Tris(chlorethyl)-phosphat oder Ammoniumphosphat und Ammoniumpolyphosphat zu verwenden. Es ist auch möglich Stabilisatoren gegen die Einflüsse der Alterung und Verwitterung, Weichmacher, fungistatische und bakteriostatische Substanzen sowie auch Füllstoffe wie Bariumsulfat, Kieselgur, Russ oder Schlämmkreide zu verwenden.

Weitere Beispiele für oberflächenaktive Zusatzstoffe, Schaumstabilisatoren, Zell-Reglersubstanzen, Stabilisatoren, Flammschutzmittel, Weichmacher, Farbstoffe und Füllstoffe, fungistatische und bakteriostatische Substanzen sowie Informationen über die Art und Weise, in der diese Zusatzstoffe zur Anwendung gebracht werden und wie sie wirken, finden sich in dem «Kunststoff-Handbuch», Band VI, von Vieweg und Höchtlen, Carl-Hanser-Verlag, München, 1966, beispielsweise auf den Seiten 103 bis 113.

Bei dem vorliegenden Verfahren wird die Menge, in der das Polyisocyanat, Komponente (A), verwendet wird, vorzugsweise so bemessen, dass das schäumbare Gemisch einen Isocyanat-Index von 70 bis 130, besonders bevorzugt einen solchen von 90 bis 110, aufweist. Der Isocyanat-Index ist der Quotient aus der Zahl der Isocyanat-Gruppen und der Zahl der gegenüber Isocyanat reaktionsfähigen Gruppen, multipliziert mit 100.

Das vorliegende Verfahren wird mit Hilfe der Reaktions-Spritzgiess-(RIM)-Technik durchgeführt. Die Menge, in der die wahlweise schäumbare Reaktionsmischung in die Form eingeführt wird, wird so bemessen, dass ein Formteil mit einer Dichte von 0,8 bis 1,2 g/cm³, vorzugsweise von 0,9 bis 1,1 g/cm³, erhalten wird. Die bevorzugte Ausgangstemperatur der in die Form eingeführten Mischung beträgt 10°C bis 60°C, mit besonderer Bevorzugung des Bereichs von 25°C bis 50°C. Die Temperatur der Form beträgt 40°C bis 100°C, vorzugsweise 50°C bis 70°C.

Bekannte Formentrennmittel des beispielsweise in den DE-OSen 1 953 637 und 2 121 670 beschriebenen Typs können ebenfalls bei dem vorliegenden Verfahren verwendet werden.

Die bei dem vorliegenden Verfahren erhältlichen Formteile eignen sich besonders für die Herstellung flexibler Kraftfahrzeug-Kotflügel und Kraftfahrzeug-Karosserie-Teile. Es ist jedoch auch, durch Veränderung der Ausgangsverbindungen (A) bis (E), insbesondere durch Verwendung einer relativ kleinen Menge des Diamins (E), möglich, beispielsweise biegsame Polyurethan-Schuhsohlen mit günstigem Abriebverhalten und ausgezeichneter mechanischer Festigkeit herzustellen.

Bei mittels des RIM-Verfahrens gefertigten Polyurethan-Elastomeren pflegt der vorgesehene Verwendungszweck des fertigen Erzeugnisses die Erfordernisse in bezug auf die physikalischen Eigenschaften vorzugeben. Variable der Formulierung, wie die Art des Kettenverlängerers sowie seine Konzentration und die Art und der Reaktionsindex des Isocanats, werden so eingestellt, dass die gewünschten physikalischen Eigenschaften erzeugt werden. Beispielsweise ist für kraftfahrttechnische Anwendungen wie für Frontverkleidungen (fascia) oder Stossfänger-Abdeckungen ein Biegemodul bei Raumtemperatur von etwa 172 N/mm² (25 000 psi) erwünscht. Eine gegebene RIM-Formulierung vom Standardtyp, die eine Konzentration von etwa 18% des aromatischen Diamin-Kettenverlängerers aufweist, liefert einen solchen Biegemodul. Für Anwendungen, bei denen eine höhere Formbeständigkeit erforderlich ist, wie bei Luftabweisern (air dams) oder Spoilern, ist ein Biegemodul bei Raumtemperatur von 345 N/mm³ (50 000 psi) erwünscht. Eine RIM-Formulierung vom Standardtyp mit einer Konzentration von etwa 23% des aromatischen Diamin-Kettenverlängerers erzeugt diesen Biegemodul. Diese Richtung der Abhängigkeit des Biegemoduls von der Konzentration des Kettenverlängerers wird in der folgenden Tabelle aufgezeigt.

| Konzentration des aromatischen Diamin-Kettenverlängerers (65 Gewichts-% 1-Methyl-3,5-diethyl-2,4-phenylendiamin; 35 Gewichts-% 1-Methyl-3,5-diethyl-2,6-phenylendiamin) | Biegemodul bei Raumtemperatur nach ASTM D-790 | |
|---|---|---|
| | N/mm² | (psi) |
| 13 | 79,3 | (11 500) |
| 18 | 172,4 | (25 000) |
| 23 | 344,8 | (50 000) |

(Alle anderen Formulierungsbestandteile bleiben konstant).

Neben der Konzentration des Kettenverlängerers und geringen Mengen von Katalysatoren, Treibmitteln oder oberflächenaktiven Stoffen ist der Rest der Polyol-Formulierung in der vorliegenden Erfindung zusammengesetzt aus Mischungen der Polyole mit endständigen Hydroxyethoxyeinheiten mit solchen mit endständigen Hydroxypropoxy-Einheiten. Zur Erreichung des besten Fliessvermögens werden grössere Mengen der Polyole mit Propylenoxid-Endgruppen benötigt, relativ zu der Konzentration der Polyole mit Hydroxyethoxy-Endgruppen. Unter den Polyolen mit Hydroxypropoxy-Endgruppen wurde herausgefunden, dass diejenigen mit höheren Polyoxyethylen-Konzentrationen in dem inneren Segment bessere Festigkeit in unvulkanisiertem Zustand («green strength») oder Widerstandsfähigkeit gegenüber einer Rissbildung oder einem Zerreissen des Formteils beim Entformen ergeben. Jedoch ist bekannt, dass ein hoher Gehalt an Polyoxyethylen in Polyurethan-Polymer die Wasserabsorption durch das Polymerisat fördert. Aus diesem Grunde ist es wichtig, die Anteile der Polyole mit Hydroxypropoxy-Endgruppen und mit Hydroxyethoxy-Endgruppen so zu steuern, dass ein bestmöglicher Ausgleich zwischen den physikalischen Eigenschaften, der Fliessfähigkeit und der Wasserabsorption erzielt wird.

In dem vorliegenden System wurde gefunden, dass die Wasserabsorption des Polymer-Endprodukts sehr gut mit dem Gesamtgehalt des Polymer-Endprodukts an Oxyethylen korreliert, unabhängig davon, ob dieser von den Endgruppen des Polyols mit endständigen Hydroxyethoxyeinheiten oder von dem einpolymerisierten Block des Polyols mit endständigen Hydroxypropoxyeinheiten herrührt. Die Widerstandsfähigkeit gegen eine Wasserabsorption ist für Polyurethan-Elastomere, die für kraftfahrttechnische Anwendungen bestimmt sind, eine wichtige Eigenschaft, da sich die Formteile bei übermässiger Wasserabsorption verziehen. Im allgemeinen wird eine Wasserabsorption von 4 Gewichts-% als angenäherte obere Grenze für eine noch annehmbare Brauchbarkeit geduldet.

In den Formulierungen der vorliegenden Erfindung wurde gefunden, dass die Wasserabsorption allgemein die folgende Gleichung, begründet auf der Gesamtkonzentration in Gewichts-% des Oxyethlens (EO) in dem Polymer-Endprodukt, erfüllt.:

$$\% \text{ Wasseraufnahme} = 1{,}72 - 0{,}26\,(EO) + 0{,}04\,(EO)^2.$$

Der Mehrfach-Korrelationskoeffizient der Analyse ist 0,92, was bedeutet, dass die Variabilität aller experimentellen Bestimmungen zu 92% allein durch den EO-Gehalt erklärt wird. Nur die übrigen 8% hängen von der Lage des EO in den Polyolen, der Wahl, welche der Polyole mit EO- und mit PO-stabilisierten Endgruppen und in welchem Mengenverhältnis sie verwendet wurden, den OH-Zahlen der Polyole, der Konzentration des Kettenverlängerers, dem Typ des verwendeten Isocyanats sowie dem experimentellen Fehler der Wasserbestimmung selbst ab. Diese Gleichung liefert eine gute Annäherung an das beste Gemisch mit den gewünschten Produkteigenschaften.

Damit die Wasseraufnahme unterhalb von etwa 4% bleibt, muss nach dieser Gleichung der Prozentsatz des EO in dem Polymerisat unterhalb von etwa 12% bleiben. Die relativen Mengen der Polyole mit Hydroxyethoxy-Endgruppen und mit Hydroxypropoxy-Endgruppen kann danach auf der Grundlage des EO-Gehalts jedes Polyols, der Konzentration des Kettenverlängerers und der erforderten Menge Isocyanats so berechnet werden, dass die Gesamtmenge des EO bei einem Wert unterhalb von 12% gehalten wird. Die nachfolgende Tabelle zeigt die theoretische Berechnung der maximalen Menge eines Polyols mit Hydroxypropoxy-Endgruppe, die zusammen mit einem Polyol mit Hydroxyethoxy-Endgruppe in Formulierungen mit verschiedenen Konzentrationen des Kettenverlängerers eingesetzt werden kann, so dass der Gesamtgehalt an EO unter ca. 12% gehalten wird und damit eine annehmbare Charakteristik der Wasserabsorption erreicht wird. Ausserdem zeigen diese Beispiele deutlich, dass das Verhältnis des Polyols mit Hydroxyethoxy-Endgruppe zu dem Polyol mit einpolymerisiertem EO-Block auch dann innerhalb eines weiten Bereichs variiert werden kann, wenn die Einschränkungen in bezug auf das Wasserabsorptionsvermögen beachtet werden.

Nachstehend wird die Berechnung für das Gemisch A in der Tabelle darstellt. Die Werte für die anderen Gemische werden auf die gleiche Weise berechnet.

Zunächst wird angenommen, dass die Gesamtmenge der aktiven Wasserstoff enthaltenden Bestandteile 100 Teile betrage. Sodann wird eine Konzentration des Kettenverlängerers gewählt (in diesem Falle 12 Gewichts-%). Somit beträgt die Polyol-Konzentration 88 Gewichts-%.

| Gemisch | Aromat. Diamin-Ketten-verlängerer (a) Konz. Gew.% | Polyole insgesamt mit Hydroxyethoxy+ Hydroxypropoxy-Endgruppe Gew.% | Isocyanat verbrauch (b) Gew.% | Maximale Menge an EO in den Polyolen (c) % | Maximale Menge an Polyol mit Hydroxypropoxy-Endgruppe im Gemisch (d) Gew.% | Maximale Menge an Polyol mit Hydroxyethoxy-Endgruppe im Gemisch (e) Gew.% |
|---|---|---|---|---|---|---|
| A | 12 | 88 | 32,6 | 15,9 | 31,9 | 56,1 |
| B | 15 | 85 | 38,5 | 16,6 | 39,6 | 45,4 |
| C | 18 | 82 | 44,4 | 17,3 | 47,4 | 34,6 |
| D | 23 | 77 | 54,2 | 18,5 | 60,6 | 16,4 |
| E | 28 | 72 | 64,0 | 19,7 | 72,0 | 0 |

(a) Aromatisches Diamin mit einem Äquivalentgewicht von 89, bestehend aus etwa 65 Gewichts-% 1-Methyl-3,5-diethyl-2,4-phenylendiamin und etwa 35 Gewichts-% 1-Methyl-3,5-diethyl-2,6-phenylendiamin.

(b) 23% NCO MDI-Quasi-Prepolymer (Äquivalentgewicht 182,6).

(c) Damit das Polymerisat-Endprodukt etwa 12% EO enthält.

(d) Polyether-polylol mit Hydroxypropoxy-Endgruppe, das 27% EO enthält sowie eine Funktionalität von 3 und eine OH-Zahl von 28 besitzt.

(e) Polyether-polyol mit Hydroxyethoxy-Endgruppe, das 13% EO enthält sowie eine Funktionalität von 3 und eine Hydroxyl-(OH)-Zahl von 28 besitzt.

Jedes in der Tabelle aufgeführte Gemisch ergibt bei der betreffenden Konzentration des Kettenverlängerers mit jenen besonderen Polyolen eine maximale Fliessfähigkeit, wobei die Wasserabsorption auf einer annehmbaren Höhe gehalten wird.

Die durch den Kettenverlängerer mit einem Äquivalentgewicht von 89 und das Polyol mit einem Äquivalentgewicht von 2004 beigesteuerten Äquivalente sind folgende:

Kettenverlängerer: 12/89 = 0,134 8 Äquivalente, Polyol: 88/2004 = 0,043 9 Äquivalente, Insgesamt 0,178 7 Äquivalente.

Damit errechnet sich der Verbrauch an Isocyanat (mit einem Äquivalentgewicht von 182,6) zu

0,178 7 x 182,6 = 32,6 Gewichts-%.

Mit einem theoretischen Gesamtgewicht des Polymer von 132,6 Teilen (100 Teile mit aktivem Wasserstoff und 32,6 Teile Isocyanat) errechnet sich der maximale EO-Gehalt der Polyole = X aufgrund der Bedingung eines Maximalwerts von 12% = 0,12 im Endprodukt d.h.

X/132,6 = 0,12, zu X = 15,9.

Zur Bestimmung der maximalen Menge des Polyols mit Hydroxypropoxy-stabilisierter Endgruppe und der Menge des Polyols mit Hydroxyethoxy-stabilisierter Endgruppe werde die Konzentration des ersteren mit a, die des letzteren mit b bezeichnet. Für eine Gesamtkonzentration des Polyols von 88 Gewichts-% gilt

a + b =88.

Von den verwendeten Polyol-Typen ist ebenfalls bekannt, dass das Polyol mit Hydroxypropoxy-stabilisierter Endgruppe 27% EO und das Polyol mit Hydroxyethoxy-stabilisierter Endgruppe 13% EO enthält. Damit ergibt sich der Gesamtgehalt des EO in dem Polymerisat zu

0,27 a + 0,13 b 15,9.

Die Auflösung der beiden a und b enthaltenden Gleichungen liefert

a = 31,9
und
b = 56,1.

Die folgenden Beispiele dienen zur weiteren Erläuterung des Verfahrens gemäss der vorliegenden Erfindung.

In den Beispielen werden, sofern nicht anders vermerkt, alle Mengen in Gewichtsteilen oder in Gewichts-% angegeben.

In den Beispielen wurden folgende Formulierungen verwendet:

Polyol A: Poly(oxyalkylen)-polyether mit Hydroxypropoxy-Endgruppe: Ein Glycerin-initiierter Poly(oxyalkylen)-polyether mit einer OH-Zahl von 25, der einen inneren gemischten Block aus 27% Ethylenoxid und 48% Propylenoxid sowie 25% Hydroxypropoxy-reste als Endgruppen enthält. Dieser Polyether wurde durch Polymerisation einer Mischung aus PO und EO mit Glycerin bis zum Vorliegen des gewünschten inneren gemischten Blocks und anschliessenden Zusatz von überschüssigem Propylenoxid und Fortsetzung der Polymerisation zur Bildung der Hydroxypropoxy-Endgruppen hergestellt.

Polyol B: Poly(oxyalkylen)-polyether mit Hydroxyethoxy-Endgruppe: Ein Glycerin-initiierter Poly(oxyalkylen)-polyether mit einer OH-Zahl von 28, der 82,5% Propylenoxid und als Endgruppen 17,5% Hydroxyethoxy-reste enthält. Dieser Polyether wurde durch Polymerisation von Propylenoxid in einer Menge, die 82,5 Gewichts-% der gewünschten Gesamtmenge an Oxiden entsprach, bis zum Erreichen des gewünschten Propylenoxid-Prozentsatzes und anschliessenden Zusatz von 17,5 Gewichts-% Ethylenoxid hergestellt, das zur Bildung der Hydroxyethoxy-Endgruppen an die Enden der Poly(oxypropylen)-Ketten anpolymerisiert wurde.

Polyol C: Poly(oxyalkylen)-polyether mit Hydroxyethoxy-Endgruppe: Ein Glycerin-initiierter Poly(oxyalkylen)-polyether mit einer OH-Zahl von 28, der 87% Propylenoxid und als Endgruppen 13% Hydroxyethoxy-reste enthält und in ähnlicher Weise wie Polyol B hergestellt wurde.

Polyol D: Poly(oxyalkylen)-polyether mit Hydroxypropoxy-Endgruppe: Ein Propylenglycol-initiierter Poly(oxyalkylen)-polyether mit einer OH-Zahl von 28, der einen gemischten Block aus 50% Ethylenoxid und 40% Propylenoxid sowie 10% Hydroxypropoxy-reste als Endgruppen enthält und in ähnlicher Weise wie Polyol A hergestellt wurde.

Polyol E: Poly(oxyalkylen)-polyether mit Hydroxypropoxy-Endgruppe: Ein Glycerin-initiierter Poly(oxyalkylen)-polyether mit einer OH-Zahl von 26, der einen gemischten Block aus 60% Ethylenoxid und 30% Propylenoxid sowie 10% Hydroxypropoxy-reste als Endgruppen enthält und in ähnlicher Weise wie Polyol A hergestellt wurde.

Polyol F: Poly(oxyalkylen)-polyether mit Hydroxypropoxy-Endgruppe: Ein Glycerin-initiierter Poly(oxyalkylen)-polyether mit einer OH-Zahl von 25, der einen gemischten Block aus 37,5% Ethylenoxid und 37,5% Propylenoxid sowie als Endgruppen 25% Hydroxypropoxy-reste enthält und in ähnlicher Weise wie Polyol A hergestellt wurde.

Polyol G: Poly(oxyalkylen)-polyether mit Hydroxypropoxy-Endgruppe: Ein Glycerin-initiierter Poly(oxyalkylen)-polyether mit einer OH-Zahl von 25, der einen gemischen Block aus 17% Ethylenoxid und 58% Propylenoxid sowie als Endgruppen 25% Hydroxypropoxy-reste enthält und in ähnlicher Weise wie Polyol A hergestellt wurde.

Polyisocyanat H: 4,4'-Diphenylmethan-diisocyanat, das durch Reaktion im Molverhältnis von etwa 10:1 mit einer Mischung aus 5,6 Gewichtsteilen eine Polypropylenglycols vom Molekulargewicht 2 000 und 1,0 Gewichtsteil Tripropylenglycol verflüssigt worden war, wurde in Form eines Gewichtsteils mit einem Gewichtsteil 4,4'-Diphenylmethan-diisocyanat, das durch partielle Carbodiimidisierung zu einer Substanz mit einem NCO-Gehalt von 28,7 bis 29,5% verflüssigt worden war, unter Bildung eines flüssigen Produkts mit einem NCO-Gehalt von etwa 26% umgesetzt. Dieses Material besitzt bei 25°C eine Viskosität von < 100 mPa.s und ein spezifisches Gewicht von etwa 1,22.

Polyisocyanat I: 4,4'-Diphenylmethan-diisocyanat, das durch Reaktion im Molverhältnis von etwa 5 : 1 mit Tripropylenglycol verflüssigt worden war, wobei ein flüssiges Produkt mit einem NCO-Gehalt von etwa 23% erhalten wurde, das weiterhin durch eine Viskosität von 725 ± 175 mPa.s (cP) bei 25°C gekennzeichnet ist.

Sämtliche physikalische Eigenschaften wurden an plattenförmigen Prüfkörpern gemessen, die mittels einer HK-500-RIM-Anlage unter Verwendung eines Kraus-Maffei-Mischkopfs hergestellt wurden. Die Form für die Platten hatte die Abmessungen 445 × 760 × 3,5 mm und besass eine senkrechte Tülle von 25,4 mm. Die angewandten Verarbeitungsbedingungen waren folgende: Temperatur des Rohmaterials: 35°C (95°F); Formtemperatur: 65,6°C (150°F); Mischdruck: 172,4 bar (2 500 psi); Verweilzeit in der Form: 30 s.

Die Tabellen I und II zeigen Formulierungen, physikalische Eigenschaften, Ergebnisse der elastischen Biegeprüfung und Werte der Wasserabsorption für Gemische, die innerhalb des Rahmens der vorliegenden Erfindung liegen, sowie für Vergleichsbeispiele ausserhalb des Rahmens der vorliegenden Erfindung.

Tabelle I
Daten der Formulierung und Wasserabsorption

| Beispiel Nr. | Polyol A Gew.% | Polyol B Gew.% | Polyol C Gew.% | Anderes Polyol Typ | Anderes Polyol Gew.% | Kettenverlängerer* Gew.% | Dibutylzinndilaurat (g) | Dibutylzinndilaurylmercaptid (g) |
|---|---|---|---|---|---|---|---|---|
| 1 | 76,7 | 0 | 0 | | 0 | 23 | 0,1 | 0,3 |
| 2 | 38,3 | 41,1 | 0 | | 0 | 20,35 | 0,1 | 0,15 |
| 3 | 38,3 | 41,1 | 0 | | 0 | 20,35 | 0,1 | 0,15 |
| 4 | 32,8 | 0 | 49,1 | | 0 | 18 | 0 | 0,1 |
| 5 | 32,8 | 0 | 49,1 | | 0 | 18 | 0,1 | 0,1 |

Tabelle I (Fortsetzung)
Daten der Formulierung und Wasserabsorption

| Beispiel Nr. | Polyol A Gew.% | Polyol B Gew.% | Polyol C Gew.% | Anderes Polyol Typ | Anderes Polyol Gew.% | Kettenverlängerer* Gew.% | Dibutylzinndilaurat (g) | Dibutylzinndilaurylmercaptid (g) |
|---|---|---|---|---|---|---|---|---|
| 6 | 32 | 0 | 47,9 | | 0 | 20 | 0,1 | 0,1 |
| 7 | 32 | 0 | 47,9 | | 0 | 20 | 0,1 | 0,1 |
| 8 | 41,6 | 0 | 41,6 | | 0 | 16,6 | 0,1 | 0,1 |
| 9 | 41,25 | 0 | 41,25 | | 0 | 17,3 | 0,1 | 0,1 |
| 10 | 0 | 82,2 | 0 | | 0 | 17,7 | 0,1 | 0 |
| 11 | 0 | 60,5 | 0 | D | 20,2 | 19,3 | 0 | 0,25 |
| 12 | 0 | 19,5 | 0 | D | 58,7 | 21,7 | 0 | 0,4 |
| 13 | 0 | 39,75 | 0 | D | 39,75 | 20,4 | 0 | 0,35 |
| 14 | 0 | 0 | 0 | E | 81,2 | 18,5 | 0 | 0,3 |
| 15 | 0 | 40,85 | 0 | E | 40,85 | 18 | 0 | 0,3 |
| 16 | 0 | 40,85 | 0 | E | 40,85 | 18 | 0 | 0,3 |
| 17 | 0 | 0 | 0 | E | 81,2 | 18,5 | 0 | 0,3 |
| 18 | 0 | 0 | 0 | E | 77,7 | 22 | 0 | 0,3 |
| 19 | 0 | 0 | 0 | F | 76,7 | 23 | 0,1 | 0,3 |
| 20 | 0 | 41,1 | 0 | F | 38,3 | 20,35 | 0,1 | 0,15 |
| 21 | 0 | 41,1 | 0 | F | 38,3 | 20,35 | 0,1 | 0,15 |
| 22 | 0 | 0 | 49,1 | F | 32,8 | 18 | 0,1 | 0 |
| 23 | 0 | 0 | 0 | G | 76,7 | 23 | 0,1 | 0,3 |
| 24 | 0 | 41,1 | 0 | G | 38,3 | 20,35 | 0,1 | 0,15 |
| 25 | 0 | 41,1 | 0 | G | 38,3 | 20,35 | 0,1 | 0,15 |
| 26 | 0 | 0 | 32,8 | G | 49,1 | 18 | 0,1 | 0 |
| 27 | 0 | 0 | 49,1 | G | 32,8 | 18 | 0,1 | 0 |
| 28 | 0 | 76,9 | 0 | | 0 | 23 | 0,1 | 0 |
| 29 | 51,2 | 0 | 25,6 | | 0 | 23 | 0,1 | 0,3 |

* Mischung aus etwa 65 Gew.% 1-Methyl-3,5-diethyl-2,4-phenylendiamin und etwa 35 Gew.% 1-Methyl-3,5-diethyl-2,6-phenylendiamin

Tabelle I (Fortsetzung)
Daten der Formulierung und Wasserabsorption

| Beispiel Nr. | Isocyanat | g Isocyanat/100 g Polyol | % Polyoxyethylen im Polymer | % Wasser-Aufnahme* |
|---|---|---|---|---|
| 1 | H | 50,3 | 13,8 | 6,17 |
| 2 | H | 46,8 | 11,9 | 3,55 |
| 3 | I | 53,4 | 11,4 | 3,12 |
| 4 | H | 42,6 | 10,69 | 3,29 |
| 5 | I | 48,6 | 10,26 | 3,0 |
| 6 | I | 52,7 | 9,74 | 2,83 |
| 7 | H | 46,2 | 10,17 | 3,7 |
| 8 | I | 44,4 | 11,52 | 3,84 |
| 9 | I | 46,5 | 11,26 | 3,68 |
| 10 | I | 45,7 | 9,7 | 3,0 |
| 11 | I | 49,0 | 13,9 | 4,4 |
| 12 | I | 53,9 | 21,3 | 11,5 |
| 13 | I | 51,3 | 17,7 | 7,8 |
| 14 | I | 49,4 | 32,5 | 29,9 |
| 15 | I | 48,6 | 21,3 | 10,5 |
| 16 | H | 41,8 | 22,3 | 17,5 |
| 17 | H | 42,5 | 34,1 | 47,3 |
| 18 | H | 50 | 31 | 25,3 |
| 19 | H | 50,3 | 19,2 | 16,25 |
| 20 | H | 45,8 | 14,8 | 6,83 |
| 21 | I | 53,4 | 14 | 4,11 |
| 22 | I | 48,1 | 12,62 | 4,66 |
| 23 | I | 58,5 | 8,2 | 2,66 |

Tabelle I (Fortsetzung)
Daten der Formulierung und Wasserabsorption

| Beispiel Nr. | Isocyanat | g Isocyanat/100 g Polyol | % Polyoxyethylen im Polymer | % Wasser-Aufnahme* |
|---|---|---|---|---|
| 24 | I | 53,4 | 8,8 | 2,66 |
| 25 | H | 46,8 | 9,19 | 2,59 |
| 26 | I | 48 | 8,52 | 2,69 |
| 27 | I | 48,1 | 8,07 | 2,58 |
| 28 | I | 58,5 | 8,49 | 2,71 |
| 29 | I | 58,0 | 10,85 | 3,50 |

* Nach 10-tägigem Eintauchen bei 32,2°C (90°F).

Tabelle II
Physikalische Eigenschaften

| Beispiel Nr. | Dichte | | Zugbeanspruchung (1) | | Bruchdehnung (1) % |
|---|---|---|---|---|---|
| | g/cm³ | (pfc) | N/mm² | (psi) | |
| 1 | 0,998 | (62,3) | 19,31 | (2800) | 380 |
| 2 | 1,001 | (62,5) | 19,31 | (2800) | 340 |
| 3 | 0,990 | (61,8) | 23,44 | (3400) | 300 |
| 4 | 1,014 | (63,3) | 16,69 | (2420) | 315 |
| 5 | 0,995 | (62,1) | 21,03 | (3050) | 300 |
| 6 | 0,992 | (61,9) | 22,00 | (3190) | 310 |
| 7 | 1,003 | (62,6) | 19,10 | (2770) | 355 |
| 8 | 1,017 | (63,5) | 19,31 | (2800) | 330 |
| 9 | 0,980 | (61,2) | 18,62 | (2700) | 300 |
| 10 | 1,048 | (65,4) | 19,51 | (2830) | 370 |
| 11 | 1,033 | (64,5) | 20,89 | (3030) | 300 |
| 12 | 1,012 | (63,2) | 24,13 | (3500) | 380 |
| 13 | 1,012 | (63,2) | 23,24 | (3370) | 380 |
| 14 | 1,048 | (65,4) | 18,62 | (2700) | 290 |
| 15 | 1,038 | (64,8) | 19,31 | (2800) | 260 |
| 16 | 1,053 | (65,7) | 20,55 | (2980) | 320 |
| 17 | 1,036 | (64,7) | 17,44 | (2530) | 360 |
| 18 | 1,008 | (62,9) | 19,65 | (2850) | 340 |
| 19 | 0,993 | (62,0) | 22,93 | (3325) | 330 |
| 20 | 1,001 | (62,5) | 19,86 | (2880) | 400 |
| 21 | 1,006 | (62,8) | 23,79 | (3450) | 310 |
| 22 | 1,001 | (62,5) | 19,31 | (2800) | 330 |
| 23 | 1,008 | (62,9) | 21,93 | (3180) | 220 |
| 24 | 0,996 | (62,2) | 21,31 | (3090) | 265 |
| 25 | 1,001 | (63,1) | 19,31 | (2800) | 270 |
| 26 | 0,971 | (60,6) | 17,53 | (2543) | 275 |
| 27 | 0,998 | (62,3) | 18,31 | (2655) | 300 |
| 28 | 1,041 | (65,0) | 26,20 | (3800) | 280 |
| 29 | 0,993 | (62,0) | 22,06 | (3200) | 275 |

Tabelle II (Fortsetzung)
Physikalische Eigenschaften

| Beispiel Nr. | Biegemodul (2) bei RT* | | Biegemodulfaktor (2) | Wärme-durchhang (3) | Biegeprüfung (4) (−28,9 °C) |
|---|---|---|---|---|---|
| | N/mm² | (psi) | (−34,4 °C/18,3 °C) (−30 °FM/65 °FM) | 1 h b. 121,1 °C(250 °F) | (−20 °F) |
| 1 | 178,72 | (25 920) | 2,7 | 5,5 | |
| 2 | 165,48 | (24 000) | 2,7 | 4,4 | |
| 3 | 245,46 | (35 600) | 3,9 | 2,8 | |

Tabelle II (Fortsetzung)
Physikalische Eigenschaften

| Beispiel Nr. | Biegemodul (2) bei RT* N/mm² | (psi) | Biegemodulfaktor (2) (−34,4 °C/18,3 °C) (−30 °FM/65 °FM) | Wärme-durchhang (3) 1 h b. 121,1 °C(250 °F) | Biegeprüfung (4) (−28,9 °C) (−20 °F) |
|---|---|---|---|---|---|
| 4 | 101,29 | (14 691) | 2,0 | 4,2 | |
| 5 | 174,17 | (25 260) | 3,2 | 4,5 | |
| 6 | 221,12 | (32 070) | 3,5 | 4,1 | |
| 7 | 141,13 | (20 469) | 2,4 | 5,5 | |
| 8 | 131,69 | (19 100) | 3,9 | 7,2 | |
| 9 | 146,17 | (21 200) | 3,7 | 5,0 | |
| 10 | 193,06 | (28 000) | 3,9 | 11,5 | |
| 11 | 174,44 | (25 300) | 4,1 | 6,0 | bestanden |
| 12 | 168,24 | (24 400) | 5,3 | 4,5 | nicht bestanden |
| 13 | 164,79 | (23 900) | 4,8 | 3,3 | nicht bestanden |
| 14 | 108,25 | (15 700) | 4,3 | 3,7 | bestanden |
| 15 | 151,00 | (21 900) | 5,1 | 4,0 | bestanden |
| 16 | 110,32 | (16 000) | 2,8 | 4,1 | bestanden |
| 17 | 96,53 | (14 000) | 2,9 | 4,9 | bestanden |
| 18 | 159,96 | (23 200) | 3,0 | 3,5 | bestanden |
| 19 | 208,23 | (30 200) | 3,3 | 3,5 | |
| 20 | 162,03 | (23 500) | 2,9 | 6,2 | |
| 21 | 242,70 | (35 200) | 4,6 | 8,7 | |
| 22 | 152,63 | (22 137) | 3,7 | 3,7 | |
| 23 | 324,20 | (47 019) | 3,4 | 3,7 | |
| 24 | 259,05 | (37 570) | 3,3 | 4,1 | |
| 25 | 143,26 | (20 778) | 2,1 | 4,3 | |
| 26 | 129,14 | (18 729) | 2,6 | 5,9 | |
| 27 | 162,10 | (23 510) | 3,1 | 6,5 | |
| 28 | 365,44 | (53 000) | 3,5 | 5,0 | |
| 29 | 310,28 | (45 000) | 4,0 | 5,0 | |

Anmerkungen zu Tabelle II:
*RT = Raumtemperatur;
1 geprüft nach ASTM D-412;
2 der Biegemodul wurde nach ASTM D-790 geprüft;
3 geprüft nach ASTM D-3769;
4 geprüft nach der Ford-Motor-Co. Prüfmethode BN 2-1; «nicht b,» bedeutet «nicht bestanden».

Die verbesserte Fliessfähigkeit der Formulierungen gemäss der Erfindung wurde anhand der Leichtigkeit beurteilt, mit der volle Prüfplatten niedriger Dichte mittels eines Platten-Formwerkzeugs der Abmessungen 445 × 760 × 3,5 mm auf einer HK-500-RIM-Anlage ohne Hilfe von Treibmitteln oder übermässige Stickstoff-Keimbildung des Polyols erhalten wurden. Das überlegene Fliessvermögen wurde für bevorzugte Proben der Erfindung auch mit Formwerkzeugen von praktischen Produktionsanlagen bestätigt.

Ein anderes Verfahren zur Bestimmung des relativen Fliessvermögens von Systemen besteht darin, die verschiedenen Systeme in einer grossen und komplizierten Form zu verarbeiten und die Dichtegradienten der hergestellten Teile zu vergleichen. In diesem Zusammenhang wird der «Dichtegradient» als die Differenz zwischen der minimalen und der maximalen Dichte eines Formteils definiert. Je niedriger dieser Dichtegradient ist, desto besser ist die Fliessfähigkeitscharakteristik des zur Herstellung des betreffenden Formteils verwendeten Systems. Vier Formulierungen (Beispiele 5,10,28 und 29 der Tabelle I) wurden auf ihre Dichtegradienten analysiert. Diese Systeme wurden sämtlich auf einer HK-1500-RIM-Maschine in einem Werkzeug für die Herstellung einer oberen Frontverkleidung (front upper fascia) für einen Chevrolet Monza 2+2 verarbeitet. Die erhaltenen Erzeugnisse besassen jeweils ein Gewicht von etwa 3,4 kg (7.5 lb). Folgende Prüfparameter wurden in allen Fällen verwendet:

| | |
|---|---|
| Rohmaterial-Temperatur: | 32,2°C (90°F) |
| Form-Temperatur: | 60-62,8°C (140-145°F) |
| Spez. Gew. des Polyols: | 0,73-0,75 |
| Mischdruck: | 172,4 bar (2,500 psi) |
| Durchsatz: | 1,81 kg/s (4 lb/s) |

Die erhaltenen Ergebnisse sind in der folgenden Tabelle A zusammengestellt.

Tabelle A
Dichte-Daten von oberen Frontverkleidungen (Front Upper Fascia) des Monza 2 + 2

| Beispiel Nr.* | Dichte der Monza 2 + 2-Frontverkleidung kg/m³ | | Dichtegradient | | Kettenverlängerer-Konz.** % | Polyol-Typ |
|---|---|---|---|---|---|---|
| | Maximum | Minimum | kg/m³ | (pcf) | | |
| 5 | 1030 | 999 | 31 | (1,9) | 18 | A + C |
| 10 | 1050 | 969 | 81 | (5,1) | 17,7 | nur B |
| 28 | 1090 | 979 | 111 | (6,9) | 23 | nur B |
| 29 | 1070 | 990 | 80 | (5,0) | 23 | A + C |

* Diese Beispiele entsprechen den identischen Beispiel-Nummern der Tabelle I.
** Mischung aus etwa 65 Gewichts-% 1-Methyl-3,5-diethyl-2,4-phenylendiamin und etwa 35 Gewichts-% 1-Methyl-3,5-diethyl-2,6-phenylendiamin.

Hieraus ist ersichtlich, dass bei konstanter Konzentration des Kettenverlängerers Polyol-Gemische, die Polylol A enthalten, einen kleineren Dichtegradienten (und damit besseres Fliessvermögen) ergeben als Systeme, in denen nur Polyol B verwendet wird.

**Patentansprüche**

1. Verfahren zur Herstellung von gegebenenfalls zellförmigen elastischen, geformten Gegenständen, die eine wasserdichte Oberflächenschicht aufweisen, aus Polyurethan-Polyharnstoff-Elastomeren durch Umsetzung einer Reaktionsmischung aus

(A) organischen Polyisocyanaten und

(B) di- oder höherfunktionellen Polyoxyalkylen-polyolen mit mehr als 50% primäre Hydroxylgruppen aufweisenden Hydroxyethoxy-Endgruppen (bezogen auf die Gesamtzahl der vorliegenden, Hydroxylgruppen aufweisenden Endgruppen), einer Hydroxylzahl von 22-35, einem Ethylenoxid-Gesamtgehalt von 12-22 Gew.-% (bezogen auf die Gesamtmenge des anwesenden Alkylenoxids) und einem mittleren Molekulargewicht von 3205,7 bis 12 000,

(C) di- oder höherfunktionellen Polyoxyalkylen-polyolen mit 80 bis 100% sekundäre Hydroxylgruppen aufweisenden Hydroxypropoxy-Endgruppen (bezogen auf die Gesamtmenge der vorliegenden Endgruppen).

(D) Katalysatoren und/oder Kombinationen von Katalysatoren, darunter Organozinnverbindungen und/oder tertiäre Amine,

(E) Amin-Kettenverlängerern, die in jedem beliebigen Verhältnis mit den Bestandteilen (B) und (C) mischbar sind, und gegebenenfalls,

(F) Treibmitteln, oberflächenaktiven Mitteln und/oder Mitteln zur Steigerung der Fliessfähigkeit, wobei diese Reaktionsmischung als System in einem Direktverfahren mittels der Reaktionsspritzgiess-(RIM)-Technik verarbeitet wird und die Reaktionspartner in Mengen verwendet werden, die einem Isocyanat-Index von 70 bis 130 entsprechen, dadurch gekennzeichnet, dass man als Polyole (C) solche verwendet, die in dem einpolymerisierten Block des Polyols Oxyethylen-Segmente in einer Menge von 15 bis 60 Gew.-% (bezogen auf die Gesamtmenge des anwesenden Alkylenoxids) enthalten und eine Hydroxylzahl von 22 bis 35 und ein mittleres Molekulargewicht von 3205,7 bis 12 000 besitzen, und der Polyolbestandteil ein Gemisch aus (B) und (C) im Gewichtsverhältnis von 1:9 bis 9:1 ist.

2. Verfahren gemäss Anspruch 1, dadurch gekennzeichnet, dass das Mengenverhältnis der Komponente (B) zu der Komponente (C) so bemessen wird, dass der Gesamt-Ethylenoxid-Gehalt des fertigen Formteils unterhalb von 12% gehalten wird.

3. Verfahren nach Anspruch 1, dadurch gekennzeichnet, dass der Bestandteil (a) ein verflüssigtes Derivat des 4,4′-Diisocyanato-diphenylmethans ist, das bei Raumtemperatur flüssig ist, und dass der Bestandteil (D) Dibutylzinn-dilaurat oder Dibutylzinn-dilaurylmercaptid oder ein Gemisch aus diesen, ggfls. mit 2,3-Dimethyltetrahydropyrimidin oder Triethylendiamin oder Gemischen aus diesen, ist, und dass der Bestandteil (E) 1-Methyl-3,5-diethyl-2,4-diaminobenzol oder 1-Methyl-3,5-diethyl-2,6-diaminobenzol oder 1,3,5-Triethyl-2,6-diaminobenzol oder 3,5,3′,5′′-Tetraethyl-4,4′-diaminodiphenylmethan oder 3,5,3′,5′-Tetraisopropyl-4,4′-diaminodiphenylmethan oder ein Gemisch aus diesen ist.

4. Verfahren nach Anspruch 1 bis 3 dadurch gekennzeichnet, dass der Bestandteil (D) in einer Menge von 0,001 bis 10 Gewichts-%, vorzugsweise von 0,05 bis 2 Gewichts-%, bezogen auf die Menge der Verbindungen (B), (C), (D), (E) und (F), verwendet wird.

5. Verfahren nach Anspruch 1 bis 4, dadurch gekennzeichnet, dass der Bestandteil (E) in einer Menge von 5 bis 50 Gewichts-%, vorzugsweise von 12 bis 30 Gewichts-%, bezogen auf die Menge der Verbindungen (B), (C), (D), (E) und (F), verwendet wird.

6. Verfahren nach Anspruch 1 bis 5, dadurch gekennzeichnet, dass die Ausgangstemperatur der in die Formen eingeführten Reaktionsmischung von 10°C bis 60°C, vorzugsweise von 25°C bis 50°C, beträgt, und die Formtemperatur von 40°C bis 100°C, vorzugsweise von 50°C bis 70°C, beträgt.

## Claims

1. A process for the production of optionally cellular elastic mouldings having a water-impermeable surface layer from polyurethane-polyurea elastomers by reacting a reaction mixture of

(A) organic polyisocyanates and

(B) difunctional or higher polyoxyalkylene-polyols containing more than 50% of hydroxyethoxy terminal groups containing primary hydroxyl groups (based on the total number of hydroxyl-group-containing terminal groups present) and having a hydroxyl number of from 22 to 35, a total ethylene oxide content of from 12 to 22% by weight (based on the total quantity of alkylene oxide present) and an average molecular weight of from 3205,7 to 12,000,

(C) difunctional or higher polyoxyalkylene-polyols containing from 80 to 100% of hydroxypropoxy terminal groups containing secondary hydroxyl groups (based on the total quantity of terminal groups present),

(D) catalysts and/or combinations of catalysts, including organotin compounds and/or tertiary amines,

(E) amine chain extending agents which are miscible in any ratio with components (B) and (C) and, optionally,

(F) blowing agents, surfactants and/or agents for increasing fluidity,

this reaction mixture being directly processed as a system by the reaction injection moulding (RIM) technique and the reactants being used in quantities which correspond to an isocyanate index of from 70 to 130, characterized in that the polyols (C) used are those which contain oxyethylene segments in a quantity of from 15 to 60% by weight (based on the total quantity of alkylene oxide present) in the copolymerized block of the polyol and which have a hydroxyl number of from 22 to 35 and an average molecular weight of from 3205,7 to 12,000 and in that the polyol component is a mixture of (B) and (C) in a ratio by weight of from 1:9 to 9:1.

2. A process as claimed in Claim 1, characterized in that the quantitative ratio of component (B) to component (C) is gauged in such a way that the final moulding has a total ethylene oxide content of less than 12%.

3. A process as claimed in Claim 1, characterized in that component (A) is a liquefied derivative of 4,4'-diisocyanatodiphenyl methane which is liquid at room temperature, in that component (D) is dibutyl tin dilaurate or dibutyl tin dilauryl mercaptide or a mixture thereof, optionally in conjunction with 2,3-dimethyl tetrahydropyrimidine or triethylene diamine or mixtures thereof, and in that component (E) is 1-methyl-3,5-diethyl-2,4-diaminobenzene or 1-methyl-3,5-diethyl-2,6-diaminobenzene or 1,3,5-triethyl-2,6-diaminobenzene or 3,5,3',5''-tetraethyl-4,4'-diaminodiphenyl methane or 3,5,3',5'-tetraisopropyl-4,4'-diaminodiphenyl methane or a mixture thereof.

4. A process as claimed in Claims 1 to 3, characterized in that component (D) is used in a quantity of from 0.001 to 10% by weight and preferably in a quantity of from 0,05 to 2% by weight, based on the quantity of compounds (B), (C), (D), (E) and (F).

5. A process as claimed in Claims 1 to 4, characterized in that component (E) is used in a quantity of from 5 to 50% by weight and preferably in a quantity of from 12 to 30% by weight, based on the quantity of compounds (B), (C), (D), (E) and (F).

6. A process as claimed in Claims 1 to 5, characterized in that the starting temperature of the reaction mixture introduced into the moulds is in the range from 10 to 60°C and preferably in the range from 25 to 50°C and the mould temperature is in the range from 40 to 100°C and preferably in the range from 50 to 70°C.

## Revendications

1. Procédé de production d'objets élastiques moulés éventuellement cellulaires qui présentent une couche superficielle étanche à l'eau, à partir d'élastomères polyuréthanne-polyurée par réaction d'un mélange réactionnel formé

(A) de polyisocyanates organiques et

(B) de polyoxyalkylène-polyols difonctionnels ou à fonctionnalité supérieure, avec plus de 50% de groupes terminaux hydroxyéthoxy présentant des groupes hydroxyle primaires (par rapport au nombre total de groupes terminaux porteurs de groupes hydroxyle présents), ayant un indice d'hydroxyle de 22-35, une teneur totale en oxyde d'éthylène de 12 à 22% en poids (par rapport à la quantité totale d'oxyde d'alkylène présent) et un poids moléculaire moyen de 3205,7 à 12 000,

(C) de polyoxyalkylène-polyols difonctionnels ou à fonctionnalité supérieure avec de 80 à 100% de groupes termininaux hydroxypropoxy présentant des groupes hydroxyle secondaires (par rapport à la quantité totale des groupes terminaux présents),

(D) de catalyseurs et/ou d'associations de catalyseurs parmi lesquels des composés organiques d'étain et/ou des amines tertiaires,

(E) d'agents aminés d'allongement de chaîne qui sont miscibles en toute proportion aux composants (B) et (C), et le cas échéant,

(F) de propulseurs, d'agents tensio-actifs et/ou d'agents élevant la fluidité,

ce mélange réactionnel étant mis en oeuvre en tant que système dans un procédé direct selon la technique de moulage réactif par injection (RIM) et les partenaires réactionnels étant utilisés en quantités qui correspondent à un indice d'isocyanate de 70 à 130, caractérisé en ce qu'on utilise comme polyols (C) des polyols qui contiennent dans la séquence incorporée par polymérisation du polyol des segments oxyéthylène en une quantité de 15 à 60% en poids (par rapport à la quantité totale d'oxyde d'alkylène présent) et ont un indice d'hydroxyle de 22 à 35 et un poids moléculaire moyen de 3205,7 à 12 000, et le composant

polyol consiste en un mélange de (B) et (C) dans un rapport en poids de 1:9 à 9:1.

2. Procédé suivant la revendication 1, caractérisé en ce que le rapport quantitatif du composant (B) au composant (C) est calculé de manière que la teneur totale en oxyde d'éthylène de la pièce moulée finie soit maintenue au-dessous de 12%.

3. Procédé suivant la revendication 1, caractérisé on ce que le composant (A) est un dérivé fluidifié du 4,4'-diisocyanatodiphénylméthane qui est liquide à la température ambiante et en ce que le composant (D) est le dilaurate de dibutylétain ou le dilaurylmercaptide de dibutylétain ou un mélange des deux, éventuellement avec de la 2,3-diméthyltétrahydropyrimidine ou de la triéthylènediamine ou leurs mélanges, et en ce que le composant (E) est le 1-méthyl-3,5-diéthyl-2,4-diaminobenzène ou le 1-méthyl-3,5-diéthyl-2,6-diaminobenzène ou le 1,3,5-triéthyl-2,6-diaminobenzène ou le 3,5,3',5''-tétraéthyl-4,4'-diaminodiphénylméthane ou le 3,5,3',5'-tétraisopropyl-4,4'-diaminodiphénylméthane ou un mélange de ces composés.

4. Procédé suivant les revendications 1 à 3, caractérisé en ce que le composant (D) est utilisé en une quantité de 0,001 à 10% en poids, de préférence de 0,05 à 2% en poids par rapport à la quantité des composés (B), (C), (D), (E) et (F).

5. Procédé suivant les revendications 1 à 4, caractérisé en ce que le composant (E) est utilisé en une quantité de 5 à 50% en poids, de préférence de 12 à 30% en poids par rapport à la quantité des composés (B), (C), (D), (E) et (F).

6. Procédé suivant les revendications 1 à 5, caractérisé en ce que la température initiale du mélange réactionnel introduit dans les moules est de 10 à 60°C, de préférence de 25 à 50°C et la température du moule est de 40 à 100°C, de préférence de 50 à 70°C.